(19) Europäisches Patentamt
European Patent Office
Office européen des brevets

(11) **EP 2 002 288 B1**

## (12) EUROPEAN PATENT SPECIFICATION

(45) Date of publication and mention
of the grant of the patent:
**06.11.2019 Bulletin 2019/45**

(21) Application number: **07755037.4**

(22) Date of filing: **05.04.2007**

(51) Int Cl.:
***G01V 3/28*** *(2006.01)*

(86) International application number:
**PCT/US2007/008627**

(87) International publication number:
**WO 2007/117631 (18.10.2007 Gazette 2007/42)**

(54) **CORRECTION OF CROSS-COMPONENT INDUCTION MEASUREMENTS FOR MISALIGNMENT USING COMPARISON OF THE XY FORMATION RESPONSE**

KORREKTUR VON KOMPONENTENÜBERGREIFENDEN INDUKTIONSMESSUNGEN AUF FEHLAUSRICHTUNG DURCH VERGLEICH DER XY-FORMATIONS-REAKTIONEN

CORRECTION DE MESURES PAR INDUCTION DE COMPOSANTS TRANSVERSAUX POUR RÉSOUDRE LE DÉFAUT D'ALIGNEMENT PAR COMPARAISON DE LA RÉPONSE DE LA FORMATION XY

(84) Designated Contracting States:
**FR GB**

(30) Priority: **06.04.2006 US 400536**
**06.04.2006 US 398838**
**06.04.2006 US 400097**

(43) Date of publication of application:
**17.12.2008 Bulletin 2008/51**

(60) Divisional application:
**08021127.9 / 2 031 422**
**08021131.1 / 2 031 420**

(73) Proprietor: **Baker Hughes, a GE company, LLC Houston, TX 77073 (US)**

(72) Inventors:
 • **RABINOVICH, Michael B. Houston, TX 77094 (US)**
 • **TABAROVSKY, Leonty A. Cypress, TX 77429 (US)**
 • **CORLEY, Bill H. Conroe, TX 77304 (US)**
 • **PELEGRI, Luis M. Humble, TX 77346 (US)**

(74) Representative: **BRP Renaud & Partner mbB Rechtsanwälte Patentanwälte Steuerberater Königstraße 28 70173 Stuttgart (DE)**

(56) References cited:
US-A- 4 659 992          US-A- 4 659 992
US-A- 5 585 790          US-A- 5 585 790
US-A- 5 757 191          US-A- 5 884 227
US-A- 5 955 884          US-A1- 2002 186 013
US-A1- 2004 113 609      US-B2- 6 584 408
US-B2- 7 019 528

• ALUMBAUGH D ET AL: "A numerical feasibility study of three-component induction logging for three dimensional imaging about a single borehole", SANDIA REPORT, vol. SAND99-2168, 1 August 1999 (1999-08-01), pages 1-56, XP55035475,

• TABAROVSKY L ET AL: "Measuring Formation Anisotropy Using Multifrequency Processing of Transverse Induction Measurements", SPE PAPERS, XX, XX, no. SPE 71706, 30 September 2001 (2001-09-30), pages 1-4, XP002362436,

**Description**

**BACKGROUND OF THE INVENTION**

**1. Field of the Invention**

The present invention is related to the field of apparatus design in the field of oil exploration. In particular, the present invention describes a method for calibrating multicomponent logging devices used for detecting the presence of oil in boreholes penetrating a geological formation.

**2. Description of the Related Art**

Electromagnetic induction resistivity well logging instruments are well known in the art. Electromagnetic induction resistivity well logging instruments are used to determine the electrical conductivity, and its converse, resistivity, of earth formations penetrated by a borehole. Formation conductivity has been determined based on results of measuring the magnetic field of eddy currents that the instrument induces in the formation adjoining the borehole. The electrical conductivity is used for, among other reasons, inferring the fluid content of the earth formations. Typically, lower conductivity (higher resistivity) is associated with hydrocarbon-bearing earth formations. The physical principles of electromagnetic induction well logging are well described, for example, in, J. H. Moran and K. S. Kunz, Basic Theory of Induction Logging and Application to Study of Two-Coil Sondes, Geophysics, vol. 27, No. 6, part 1, pp. 829-858, Society of Exploration Geophysicists, December 1962. Many improvements and modifications to electromagnetic induction resistivity instruments described in the Moran and Kunz reference, supra, have been devised, some of which are described, for example, in US 4837517 to *Barber*, in US 5157605 to Chandler et al., and in US 5600246 to Fanini et al.

The conventional geophysical induction resistivity well logging tool is a probe suitable for lowering into the borehole and it comprises a sensor section containing a transmitter antenna and a receiver antenna and other, primarily electrical, equipment for measuring data to infer the physical parameters that characterize the formation. The sensor section, or mandrel, comprises induction transmitters and receivers positioned along the instrument axis, arranged in the order according to particular instrument or tool specifications and oriented parallel with the borehole axis. The electrical equipment generates an electrical voltage to be further applied to a transmitter induction coil, conditions signals coming from receiver induction coils, processes the acquired information, stores the data or, by means of telemetry sends the data to the earth surface through a wire line cable used to lower the tool into the borehole.

In general, when using a conventional induction logging tool with transmitters and receivers (induction coils) oriented only along the borehole axis, the hydrocarbon-bearing zones are difficult to detect when they occur in multi-layered or laminated reservoirs. These reservoirs usually consist of thin alternating layers of shale and sand and, oftentimes, the layers are so thin that due to the insufficient resolution of the conventional logging tool they cannot be detected individually. In this case the average conductivity of the formation is evaluated.

Conventional induction well logging techniques employ coils wound on an insulating mandrel. One or more transmitter coils are energized by an alternating current. The oscillating magnetic field produced by this arrangement results in the induction of currents in the formations that are nearly proportional to the conductivity of the formations. These currents, in turn, contribute to the voltage induced in one or more receiver coils. By selecting only the voltage component that is in phase with the transmitter current, a signal is obtained that is approximately proportional to the formation conductivity. In conventional induction logging apparatus, the basic transmitter coil and receiver coil have axes that are aligned with the longitudinal axis of the well logging device. (For simplicity of explanation, it will be assumed that the bore hole axis is aligned with the axis of the logging device, and that these are both in the vertical direction. Also single coils will subsequently be referred to without regard for focusing coils or the like.) This arrangement tends to induce secondary current loops in the formations that are concentric with the vertically oriented transmitting and receiving coils. The resultant conductivity measurements are indicative of the horizontal conductivity (or resistivity) of the surrounding formations. There are, however, various formations encountered in well logging which have a conductivity that is anisotropic. Anisotropy results from the manner in which formation beds were deposited by nature. For example, "uniaxial anisotropy" is characterized by a difference between the horizontal conductivity, in a plane parallel to the bedding plane, and the vertical conductivity, in a direction perpendicular to the bedding plane. When there is no bedding dip, horizontal resistivity can be considered to be in the plane perpendicular to the bore hole, and the vertical resistivity in the direction parallel to the bore hole. Conventional induction logging devices, which tend to be sensitive only to the horizontal conductivity of the formations, do not provide a measure of vertical conductivity or of anisotropy. Techniques have been developed to determine formation anisotropy. See, *e.g.* US 4302722 to Gianzero et al.. Transverse anisotropy often occurs such that variations in resistivity occur in the azimuthal direction.

Thus, in a vertical borehole, a conventional induction logging tool with transmitters and receivers (induction coils) oriented only along the borehole axis responds to the average horizontal conductivity that combines the conductivity of both sand and shale. These average readings are usually dominated by the relatively higher conductivity of the shale layers and exhibit reduced sensitivity to the lower conductivity sand layers where hydrocarbon reserves are produced. To address this problem, loggers have turned to using transverse induction logging tools having magnetic transmitters and receivers (induction coils) oriented transversely with respect to the tool longitudinal axis. Such instruments for transverse induction well logging have been described in PCT Patent publication WO 98/00733 of Beard et al. and US 5452761 to Beard et al.; US 5999883 to Gupta et al.; and US 5781436 to Forgang et al.

One, if not the main, difficulty in interpreting the data acquired by a transversal induction logging tool is associated with vulnerability of its response to borehole conditions. Among these conditions is the presence of a conductive well fluid as well as wellbore fluid invasion effects.

In induction logging instruments, the acquired data quality depends on the formation electromagnetic parameter distribution (conductivity) in which the tool induction receivers operate. Thus, in the ideal case, the logging tool measures magnetic signals induced by eddy currents flowing in the formation. Variations in the magnitude and phase of the eddy currents occurring in response to variations in the formation conductivity are reflected as respective variations in the output voltage of receivers. In the conventional induction instruments, these receiver induction coil voltages are conditioned and then processed using analog phase sensitive detectors or digitized by digital-to-analog converters and then processed with signal processing algorithms. The processing allows for determining both receiver voltage amplitude and phase with respect to the induction transmitter current or magnetic field waveform. It has been found convenient for further uphole geophysical interpretation to deliver the processed receiver signal as a vector combination of two voltage components: one being in-phase with transmitter waveform and another out-of-phase, quadrature component. Theoretically, the in-phase coil voltage component amplitude is the more sensitive and noise-free indicator of the formation conductivity.

Recognizing the fact that no hardware calibration is perfect, and may further be susceptible to changes over time, the present invention is related to calibration of multicomponent induction logging instruments in the presence of possible hardware errors and misalignments.

"A Numerical Feasability Study of Three Component Induction Logging for Three Dimensional Imaging About a Single Borehole" by Alumbaugh et. al., Sandia Report SAND99-2168, 1999, discloses an induction logging tool consisting of three mutually orthogonal magnetic dipole sources and multiple 3 component field receivers. "Measuring Formation Anisotropy Using Multifrequency Processing of Transverse Induction Measurements" by Tabarovsky et. al., SPE 71706, SPE International, 2001, discloses multi-frequency processing of transverse induction measurements.

## SUMMARY OF THE INVENTION

To achieve the above object, the present invention provides a method of estimating a parameter of interest of an earth formation, an apparatus for estimating a parameter of interest of an earth formation and a corresponding computer readable medium to be used with an apparatus for evaluating an earth formation, as defined in independent claims 1, 5 and 10, respectively.

## BRIEF DESCRIPTION OF THE DRAWINGS

The present invention is best understood with reference to the accompanying figures in which like numerals refer to like elements and in which:

FIG. **1** shows schematically a wellbore extending into a laminated earth formation, into which wellbore an induction logging tool as used according to the invention has been lowered;

FIG. **2A** (prior art) illustrates a conventional resistivity measurement in the vertical direction;

FIG. **2B** (prior art) illustrates a resistivity measurement in the horizontal direction;

FIG. **3** shows a borehole inclined to a bedding plane;

FIG. **4** shows a flow chart of one embodiment of the present invention using quadrature signals;

FIG. **5** shows a flow chart of another arrangement not in accordance with the present invention using average signals; and

FIG. **6** shows a flow chart of an arrangement not in accordance with the present invention using inversion.

## DETAILED DESCRIPTION OF THE INVENTION

The instrument structure provided by the present invention enables increased stability and accuracy in an induction wellbore logging tool and its operational capabilities, which, in turn, results in better quality and utility of wellbore data acquired during logging. The features of the present invention are applicable to improve the accuracy of a transverse induction tool.

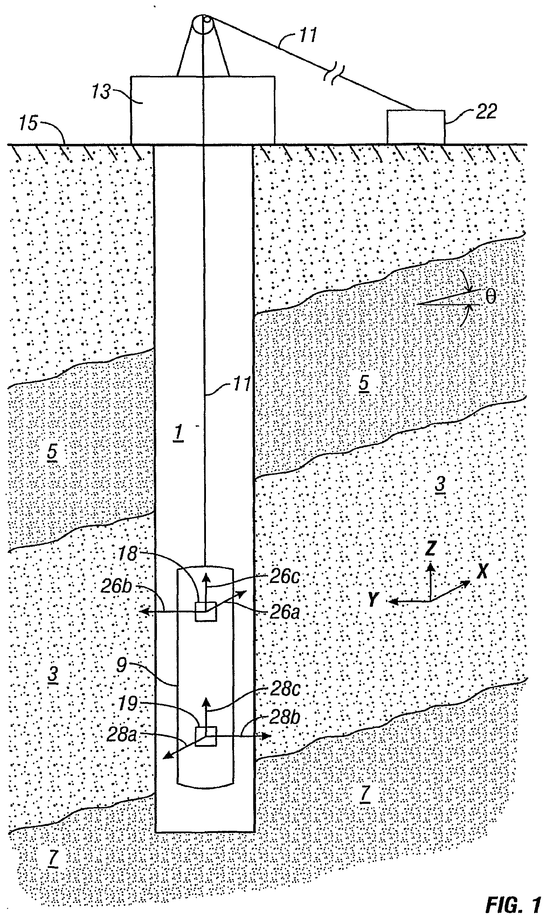

The invention will now be described in more detail, and by way of example, with reference to the accompanying drawings. **FIG. 1** schematically shows a wellbore **1** extending into a laminated earth formation, into which wellbore an induction logging tool **9** as used according to the present invention has been lowered. The wellbore in FIG. **1** extends into an earth formation that includes a hydrocarbon-bearing sand layer **3** located between an upper shale layer **5** and a lower shale layer **7,** both having higher conductivity than the hydrocarbon bearing sand layer **3**. An induction logging tool **9** used in the practice of the invention has been lowered into the wellbore **1** via a wireline **11** extending through a blowout preventor **13** (shown schematically) located at the earth surface **15**. The surface equipment **22** includes an electric power supply to provide electric power to the set of coils **18** and a signal processor to receive and process electric signals from the receiver coils **19**. Alternatively, the power supply and/or signal processors are located in the logging tool. It is to be noted that the term "coil" is intended to include antennas made of non-circular conductors as well as conductor arrangements (including rectangular configurations) limited to a plane that are commonly used to transmit and receive electromagnetic energy.

The relative orientation of the wellbore **1** and the logging tool **9** with respect to the layers **3, 5, 7** is determined by two angles, one of which $\theta$ as shown in the FIG. **1.** For determination of these angles see, for example, US 5999883 to Gupta, et al. The logging tool **9** is provided with a set of transmitter coils **18** and a set of receiver coils **19,** each set of coils **18, 19** being connected to surface equipment **22** via suitable conductors (not shown) extending along the wireline **11.**

Each set of coils **18** and **19** includes three coils (not shown), which are arranged such that the set has three magnetic dipole moments in mutually orthogonal directions, that is, in x, y and z directions. The three-coil transmitter coil set transmits $T_x$, $T_y$ and $T_z$. The receiver coil receives $R_x$, $R_y$ and $R_z$ plus the cross-components, $R_{xy}$, $R_{xz}$ and $R_{zy}$. Thus, coil set **18** has magnetic dipole moments **26a, 26b, 26c,** and coil set **19** has magnetic dipole moments **28a, 28b, 28c.** In one embodiment, the transmitter coil set **18** is electrically isolated from the receiver coil set **19** The apparatus and method using a wireline is not intended to be a limitation of the invention, it being possible to practice the invention with a logging tool on a bottomhole assembly (BHA) conveyed on a drilling tubular. For the purposes of the present invention, the BHA and the assembly described in **Fig. 1** may be referred to as a downhole assembly.

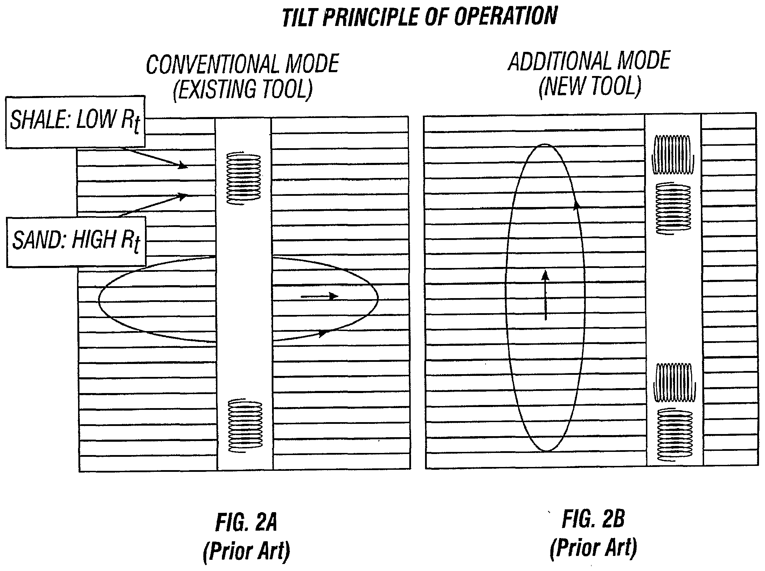

As shown in **FIG. 2A,** conventional induction logging tools provide a single transmitter coil and a receiver coil that measure resistivity in the horizontal direction. In the conventional horizontal mode, as shown in **FIG. 2A,** the resistivities of adjacent high resistivity sand and low resistivity shale layers appear in parallel, thus the resistivity measurement is dominated by low resistivity shale. As shown in **FIGS. 1** and **2B,** in the present invention a transverse coil is added to measure resistivity in the vertical direction. In the vertical direction, the resistivity of the highly resistive sand and low resistivity shale are appear in series and thus the vertical series resistivity measurement is dominated by the resistivity of the highly resistive sand.

For ease of reference, normal operation of the tool **9,** as shown in **FIGS. 1** and **2B,** will be described hereinafter only for the coils having dipole moments in the x-direction, i.e. dipole moments **26a** and **28a.** During normal operation an alternating current of a frequency $f_1$ is supplied by the electric power supply of surface equipment **22** to transmitter coil set **18** so that a magnetic field with magnetic dipole moment **26a** is induced in the formation. In an alternative embodiment, the frequency is swept through a range $f_1$ through $f_2$. This magnetic field extends into the sand layer **3** and induces a number of local eddy currents in the sand layer **3**. The magnitude of the local eddy currents is dependent upon their location relative to the transmitter coil set **18**, the conductivity of the earth formation at each location, and the frequency at which the transmitter coil set **18** is operating. In principle, the local eddy currents act as a source inducing new currents, which again induce further new currents, and so on. The currents induced into the sand layer **3** induce a response magnetic field in the formation, which response magnetic field is not in phase with the transmitted magnetic field, but which induces a response current in receiver coil set **19.** The magnitude of the current induced in the sand layer **3** depends on the conductivity of the sand layer **3** and affects the magnitude of the response current in receiver coil set **19.** The magnitude of the response current in receiver **coil 19** also depends on the conductivity of sand layer **3** and thereby provides an indication of the conductivity of the sand layer **3**. However, the magnetic field generated by transmitter coil set **18** not only extends into sand layer **3,** but also into the wellbore fluid and into the shale layers **5** and **7** so that currents in the wellbore fluid and the shale layers **5** and **7** are induced.

Let us consider $H_{XY}$ measurement, where X is orientation of the transmitter and Y is the orientation of the receiver. This notation where the first subscript refers to the transmitter orientation and the second to the receiver orientation will be used throughout the present disclosure. We assume that if the coils are properly aligned (exactly 90° between X and Y coils) the response from the formation will be $H_{XYtrue}$. If the Y receiver is misaligned with the X transmitter by the angle $\alpha$, then the magnetic field $H_{XY}$ measured in such array is

$$H_{XY} = H_{XYtrue} \cdot \cos\alpha + H_{XXtrue} \cdot \sin\alpha \qquad (1).$$

The angle $\alpha$ is considered to be positive if the angle between the X and Y coils is less than 90°. Those skilled in the art having the benefit of the present disclosure would recognize that the misalignment angle could change over time for wireline measurements and MWD applications.

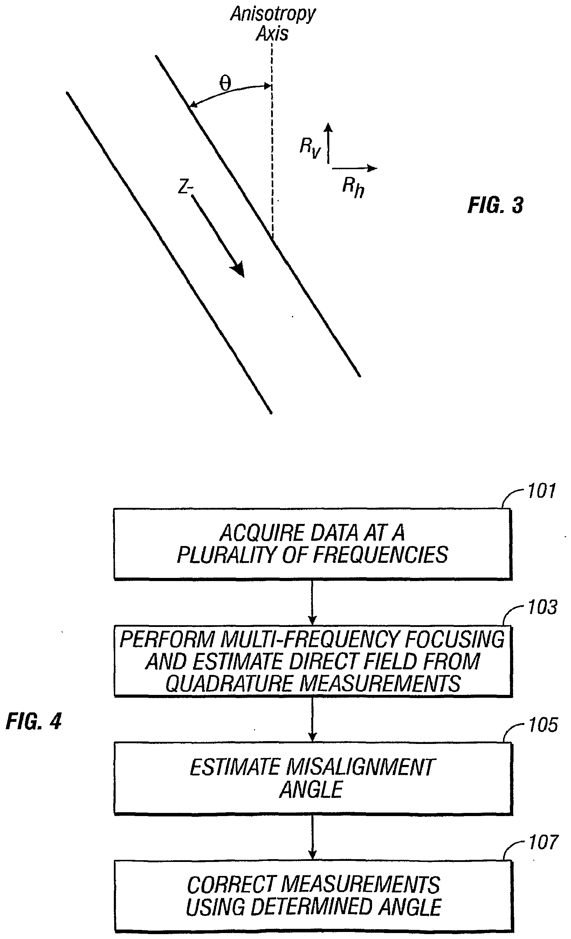

A simple example shows that even when the misalignment angle $\alpha$ is small (typically 1-5°) there are quite a few cases where the misalignment error becomes comparable with the true Hxy response. In the example, $R_h$, the horizontal resistivity in a direction normal to the anisotropy axis is taken as 0.5 $\Omega$-.m; $R_v$, the vertical resistivity (in a direction parallel to the anisotropy axis) is taken as 2 $\Omega$-.m; the relative dip angle $\theta$ (see **Fig. 3**) between the tool axis and the anisotropy axis is 20°. For a relative toolface rotation of 45° and a frequency of 83.3 kHz, the true response (real voltage converted to apparent conductivities) for the XX component is -524.3 mS/m and for the XY component is 25.4 mS/m.

For a misalignment angle of 3°, the measured XY signal will be

$$\sigma_{XYmeasured} = 25.4mS/m \cdot \cos 3° - 524.3mS/m \cdot \sin 3° = -2.1 \text{ mS/m}$$

We can see that in this case the misalignment error exceeds 100%, having changed by an amount of about 27.5 mS/m. If the misalignment angle $\alpha$ is known, **Eqn.1** can be used for correcting the measured XY signal. Unfortunately, the misalignment angle $\alpha$ cannot be measured in advance because it can change during pre-logging tool string assembly and also while logging due to twisting and bending effects.

According to the invention, the misalignment angle $\alpha$ is estimated and the measurements are corrected using a multi-frequency quadrature signal. The 3DEX tool has a 3-coil configurations (two transmitter and one receiver coils) for cross-components that are not mutually balanced. The main reason for mutually balanced multi-coil arrays in induction measurements (including main components of the 3DEX tool) is compensation of the direct field in quadrature components. This direct field is large compared to the formation response, so if it is not compensated and the phase detection is not accurate enough, it will propagate in the real voltage and cause undesired distortion. For cross-components measurements, the mutual balancing is not as important because the direct field of the X transmitter does not contribute into the Y receiver due to orthogonality. But if the X and Y coils are misaligned, the direct field from unbalanced X transmitters does contribute to the Y quadrature signal. The misalignment angle $\alpha$ is estimated based on the amplitude of this signal.

**Eqn. (1)** is used to analyze the misaligned XY quadrature signal. The response consists of the cosine projection of true XY formation quadrature signal and the sine projection of true XX signal. The true XX signal is dominated by the direct field, which is frequency and formation independent. If we extract the constant part of the XY quadrature signal and compare it with the total direct field, we will be able to find the misalignment angle. For example, let us consider the 3DEX response in the following model:

$$R_h = 1 \ \Omega\text{-m};$$

$$R_v = 4 \ \Omega\text{-m};$$

Relative dip = 45°;
Relative rotation = 45°;
Frequency=20.83 kHz.

The values of the XY quadrature formation response and the direct field for a 2° misalignment for this model are presented in Table 1. It can be seen that in this case the formation response is comparable with the direct field, meaning that we have to separate the direct field from the formation response to accurately estimate the misalignment angle.

Table 1. Comparison of the XY formation response and the direct field caused by 2° misalignment

| XY formation response Re(Hxy) (Wb/m$^2$) | Direct field for 2° misalignment (Wb/m$^2$) | Formation relative contribution % |
|---|---|---|
| 0.0474*10$^{-3}$ | -0.0903* 10$^{-3}$ | 52.5 |

The separation of the direct field from the formation response in the quadrature signal may be achieved by applying the Taylor expansion used in multi-frequency focusing of the real signal. Using results from US5884227 to Rabinovich et al., the quadrature signal is given by the Taylor series expansion:

$$\mathrm{Re}(H) = b_o + b_1\omega^{3/2} + b_2\omega^2 + b_3\omega^{5/2} + b_4\omega^{7/2} + b_5\omega^4 + b_6\omega^{9/2}..... \qquad (2)$$

The first term in this expansion is independent of frequency and represents the direct field. In the present invention, multi-frequency quadrature measurements are made and this first term is extracted using the Taylor series expansion. Typically, this is done using a multi-frequency focusing algorithm with the appropriate power series. To test our invention, we generated synthetic data for two different models:

1. $R_h$=10$\Omega$-m; $R_v$=40$\Omega$-m, Relative dip=45°, Relative rotation=45°;
2. $R_h$=1$\Omega$-m; $R_v$=4$\Omega$-m, Relative dip=45°, Relative rotation=45°.

For each model we calculated responses for 5 different misalignment angles: 0, 1, 2, 3, 4, 5 degrees. The term "misalignment angle" when used with respect to coils that are nominally orthogonal to each other means a difference from 90° in alignment. For each misalignment angle we applied the above-described procedure to extract the direct field from the data, and based on this value, calculated the misalignment angle. The results for the both models are presented in the tables below.

**Table 2. Calculation of the misalignment angle for the Model 1.**

| True misalignment angle (deg) | Extracted direct field (Wb/m$^2$ ) | Total direct field (Wb/m$^2$) | Calculated misalignment angle (deg) |
| --- | --- | --- | --- |
| 5 | -0.225*10$^{-3}$ | -0.2586*10$^{-2}$ | 4.99 |
| 4 | -0.180*10$^{-3}$ | -0.2586*10$^{-2}$ | 3.99 |
| 3 | -0.135*10$^{-3}$ | -0.2586*10$^{-2}$ | 2.99 |
| 2 | -0.902*10$^{-4}$ | -0.2586*10$^{-2}$ | 1.999 |
| 1 | -0.451*10$^{-4}$ | -0.2586*10$^{-2}$ | 0.999 |
| 0 | -0.450*10$^{-6}$ | -0.2586*10$^{-2}$ | 0.01 |

**Table 3. Calculation of the misalignment angle for the Model 2.**

| True misalignment angle (deg) | Extracted direct field (Wb/m$^2$) | Total direct field (Wb/m$^2$) | Calculated misalignment angle (deg) |
| --- | --- | --- | --- |
| 5 | -0.224*10$^{-3}$ | -0.2586*10$^{-2}$ | 4.97 |
| 4 | -0.179*10$^{-3}$ | -0.2586*10$^{-2}$ | 3.97 |
| 3 | -0.134*10$^{-3}$ | -0,2586*10$^{-2}$ | 2.97 |
| 2 | -0.885*10$^{-4}$ | -0.2586*10$^{-2}$ | 1.96 |
| 1 | -0.433*10$^{-4}$ | -0.2586*10$^{-2}$ | 0.96 |
| 0 | -0.188*10$^{-5}$ | -0.2586*10$^{-2}$ | 0.04 |

This embodiment of the invention may be represented by the flow chart of **Fig. 4.** Data are acquired at a plurality of frequencies **101.** As a specific example, the transmitter is an X transmitter and the receiver is a Y receiver. A multi-frequency focusing of the quadrature magnetic signal is performed **103** using **eqn. (2)** to give the direct field between the transmitter and the receiver. This may also be done using an equivalent formulation for the electric field using methods known to those versed in the art having the benefit of the present disclosure. Using the estimated direct field, the misalignment angle is estimated **105.** The estimated misalignment angle may then be used to correct the individual single frequency measurements, including the in-phase components **107.** It should be noted that while the description above has been made with respect to the XY component, from reciprocity considerations, the method is equally valid for the YX component.

Once the misalignment angle is estimated, all of the multi-component signals can be corrected for misalignment and used for interpreting formation resistivities and petrophysical parameters. The principles used for this interpretation have been discussed, for example, in US6470274 to Mollison et al, US6643589 to Zhang et al.5 US6636045 to Tabarovsky et al. Specifically, the parameters estimated may include horizontal and vertical resistivities (or conductivities), relative dip angles, strike angles, sand and shale content, and water saturation.

The method described above is generally not applicable when a co-located transmitter coil array is used in conjunction with a co-located main receiver coil array and a co-located bucking receiver coil array. In such a situation, the main and bucking coils are decoupled and the misalignment is estimated separately for the main and bucking coils.

An arrangement not in accordance with the present invention is based on recognition of the fact that for a given anisotropic formation with a particular relative dip, the XY cross-component response will change from a negative value at -45° relative rotation to a positive value of equal magnitude at 45° relative rotation. A zero-crossing will occur at 0° relative rotation. The actual magnitude of the positive and negative values will be dependent on the resistivity and the relative dip properties of the formation, but the response should always oscillate about zero for a perfectly aligned tool rotating in a uniform anisotropic formation.

If the X transmitters and the Y receiver are misaligned, a portion of the direct XX signal will be introduced into the XY response as described previously. If the tool is rotating through a uniform formation, the deviation of the oscillations away from zero allows this misalignment to be computed.

To apply the technique, a relatively uniform formation (typically a thick shale interval) is chosen for making measurements with the 3DEX tool. The tool is rotated within the borehole. For wireline applications, this may require an auxiliary motor for rotating the tool or may result from rotation of the wireline and the downhole assembly as it is conveyed through the borehole. For measurement-while-drilling (MWD) applications, the rotation is accomplished by the rotation of the bottomhole assembly (BHA) that carries the 3DEX tool. The average XY and XX responses across this formation are computed. Based on the **eqn. (1)** and the assumption that the average $\overline{H}_{XYtrue}$ should be zero, where the overbar represents an averaging, the misalignment angle may be computed using average responses.

$$H_{XY} = H_{XXtrue} - \sin\alpha \qquad\qquad (3)$$

This technique assumes that the misalignment is not changing and will not compensate for twisting and bending while logging unless the effect remains consistent. The estimation of bias in ZX measurements on a rotating drillstring has been discussed in US Patent Application Ser. No. 11/299,053 of Chemali et al. Once the misalignment angle has been estimated, measurements may be corrected using **eqn. (1).**

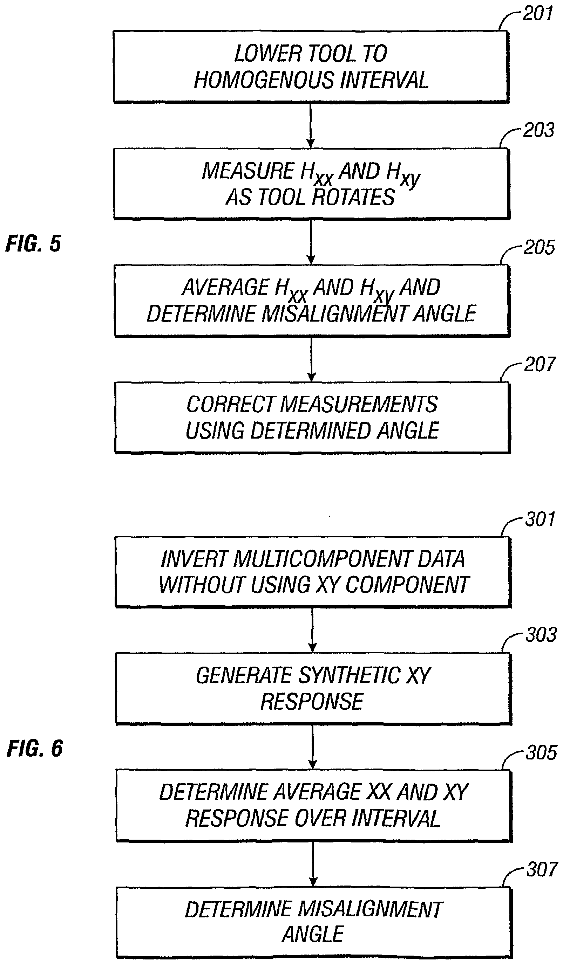

The flow chart for this method is illustrated in **Fig. 5.** The tool is lowered into a substantially homogenous interval **201.** The $H_{xx}$ and $H_{xy}$ measurements are made at a plurality of rotational angles as the tool rotates **203.** The $H_{xy}$, measurements correspond to measurements made with a first receiver antenna and the $H_{xx}$ measurements corresponds to measurements made with a second receiver antenna. The measurements are averaged and the misalignment angle estimated **205.** In one embodiment of the invention, the measurements are made at uniformly spaced angles and a simple averaging can be done. In another embodiment of the invention, the measurements may be made with non-uniform rotational angles and an appropriate averaging procedure may be used. The estimated bias provides and estimate of the misalignment angle may then be used to correct the measurements **207** made in other portions of the wellbore using **eqn. (1)** and a parameter of interest of the earth formation estimated.

Another arrangement not in accordance with the present invention uses an inversion of 3DEX data to obtain horizontal resistivity, vertical resistivity, and formation dip and azimuth, and requires the use of multi-component measurements including the three primary components (XX, YY, ZZ) plus at least one cross-component (XY or XZ). A method for simultaneous determination of formation angles and anisotropic resistivity using multi-component induction logging data is disclosed in US6643589 to Zhang et al. The inversion is performed using a gradient technique such as a generalized Marquardt-Levenberg method. In this generalized Marquardt-Levenberg method, a data objective function is defined that is related to a difference between the model output and the measured data. The iterative procedure involves reducing a global objective function that is the sum of the data objective function and a model objective function related to changes in the model in successive iterations. In an alternate embodiment of the invention, the formation azimuth angle is excluded from the iterative process by using derived relations between the multicomponent measurements. The gradient technique is part of a class of techniques collectively referred to as search techniques.

When multi-array induction measurements are also available, an inversion method is described in US6885947 to Xiao et al. Data are acquired using a multi-array logging tool in a borehole having an angle of inclination to a normal to the bedding plane of earth formations. The multi-array measurements are filtered using angle dependent filters to give a filtered curve corresponding to a target one of the multi-array measurements using angle-dependent filters. Correlation coefficients are estimated for a set of possible dip angles and a relative dip angle is estimated from the correlation coefficients. This dip angle estimate together with bed boundaries obtained from the multi-array measurements are used for inverting multi-component measurements alone or jointly with multi-array measurements to refine the relative dip angle interpretation and give horizontal and vertical formation resistivity.

Yet another inversion method using a separation of modes is disclosed in US6636045 to Tabarovsky et al. In *Tabarovsky,* a combination of principal component measurements is used to estimate the horizontal resistivity of the earth formations. The estimated horizontal resistivities are used in a model for inversion of other components of the data to obtain the vertical formations resistivities. *Tabarovsky* further uses multifrequency focusing when multifrequency measurements are available.

Another inversion method is described in US Patent Application Ser. No. 10/867,619 of Tabarovsky et al. In one embodiment of the *Tabarovsky* '619, using known values of the relative dip angle and azimuth, the focused measurements are separated into two or more fundamental modes. One of the fundamental modes is related primarily to the horizontal conductivity (or resistivity) of the earth formation, so that the horizontal conductivity may be obtained from the first mode. Using the estimated horizontal conductivity and the second mode, the vertical conductivity may be estimated. In another embodiment of the invention, the fundamental modes and the relative dip angle and azimuth are estimated simultaneously using measurements made at a plurality of depths. The simultaneous determination is done by searching over a range of relative dip angles and azimuths. Alternatively, the search may be done over a range of absolute dips and azimuths and using measurements made by orientation and navigation sensors on the tool.

An arrangement not in accordance with the present invention uses an inversion technique such as that described in *Zhang* et al., *Xiao* et al., *Tabarovsky* et al., or any other suitable inversion method. A common characteristic of all of the methods is that a more stable and unique solution for formation dip and azimuth is estimated when both cross-components are included. However, if the cross-components are perfectly aligned, the same solution for formation dip and azimuth should be achieved if either the XY or the XZ components are omitted. If the XY component is in error due to misalignment, this will not be true.

The inversion technique to check for misalignment initially inverts the data with a particular cross-component such as the XY component omitted. Forward modeling is then used with these results to generate a simulated (expected) XY response. The average difference between the simulated and actual XY responses should be zero. Any difference is attributed to misalignment.

To apply the technique, the average XX and XY responses are estimated over the entire logging interval along with the average simulated XY response obtained by forward modeling from the inversion performed without the XY measurement. Based on the **eqn. (1)** and the assumption that the simulated XY response represents $H_{XYtrue}$, the misalignment angle may be computed using average responses.

$$\bar{H}_{xy}^{measured} - \bar{H}_{xy}^{simulated} = \bar{H}_{xx}\sin\alpha$$

where the overbar represents and averaging. This technique also assumes that the misalignment is not changing and will not compensate for twisting and bending while logging unless the effect remains consistent. Once the correction is estimated and applied, a new inversion of the multi-component measurements may be carried out using all the available components.

**Fig. 6** is a flow chart of this method. Multicomponent measurements (optionally with multiarray measurements) are acquired and the measurements are inverted without using the *XY* component **301.** Simulated *XY* measurements are generated for the model **305.** The *XX* and *XY* measurements are averaged over the interval **305.** Next, the misalignment angles is estimated **307** as discussed above.

Implicit in the control and processing of the data is the use of a computer program on a suitable machine-readable medium that enables the processor to perform the control and processing. The machine-readable medium may include ROMs, EPROMs, EAROMs, Flash Memories and Optical disks.

While the foregoing disclosure is directed to the preferred embodiments of the invention, the scope of the present invention is defined by the appended claims.

The following definitions are helpful in understanding the scope of the invention:

*alignment:* the proper positioning or state of adjustment of parts in relation to each other;
*calibrate:* to standardize by determining the deviation from a standard so as to ascertain the proper correction factors;
*coil:* one or more turns, possibly circular or cylindrical, of a current-carrying conductor capable of producing a magnetic field;
*EAROM:* electrically alterable ROM;
*EPROM:* erasable programmable ROM;
*flash memory:* a nonvolatile memory that is rewritable;
machine- readable medium: something on which information may be stored in a form that can be understood by a computer or a processor;
*misalignment:* the condition of being out of line or improperly adjusted; for the cross-component, this is measured by a deviation from orthogonality;

*Optical disk*: a disc-shaped medium in which optical methods are used for storing and retrieving information;
*Position*: an act of placing or arranging; the point or area occupied by a physical object
*Quadrature*: 90° out of phase; and
*ROM*: Read-only memory.

**Claims**

1. A method of estimating a parameter of interest of an earth formation, the method comprising:

   conveying a logging tool (9) into a borehole in the earth formation;
   exciting a transmitter antenna (18) on the logging tool (9) at a plurality of frequencies, the transmitter antenna (18) having a first axial direction;
   receiving, at each of the plurality of frequencies, a quadrature signal responsive to the excitation with a receiver antenna (19) having a second axial direction different from the first axial direction, wherein the first axial direction and the second axial direction are substantially orthogonal to each other;
   performing multi-frequency focusing of the quadrature signals received at each of the plurality of frequencies to obtain a direct field between the transmitter antenna (18) and the receiver antenna (19);
   estimating from the direct field a misalignment angle between the transmitter antenna (18) and the receiver antenna (19), the misalignment angle indicating a deviation from orthogonal positioning of the transmitter antenna (18) and the receiver antenna (19) in relation to each other;
   receiving a further signal with the receiver antenna (19) at at least one of the plurality of frequencies;
   correcting said further signal using the estimated misalignment angle; and
   using the corrected signal to estimate the parameter of interest of the earth formation.

2. The method of claim 1, wherein estimating the misalignment angle further comprises representing the signal at each of the plurality of frequencies by a Taylor series expansion.

3. The method of claim 1 or 2, wherein said further signal comprises an in-phase signal.

4. The method of any preceding claim, wherein the parameter of interest is at least one of: (i) a horizontal conductivity; (ii) a vertical conductivity; (iii) a horizontal resistivity; (iv) a vertical resistivity; (v) a relative dip angle; (vi) a strike angle; (vii) a sand fraction; (viii) a shale fraction; and (ix) a water saturation.

5. An apparatus for estimating a parameter of interest of an earth formation, the apparatus comprising:

   a logging tool (9) configured to be conveyed in a borehole in the formation;
   a transmitter antenna (18) on the logging tool (9) configured to be operated at a plurality of frequencies, the transmitter antenna (18) having a first axial direction;
   a receiver antenna (19) having a second axial direction different from the first axial direction, wherein the transmitter antenna (18) and the receiver antenna (19) are substantially orthogonal to each other, the receiver antenna (19) being configured to receive a quadrature signal resulting from the operation of the transmitter antenna (18) at each of the plurality of frequencies; and
   a processor configured to:

   perform multi-frequency focusing of the quadrature signals received at each of the plurality of frequencies to obtain a direct field between the transmitter antenna (18) and the received antenna (19); and
   estimate from the direct field a misalignment angle between the transmitter antenna (18) and the receiver antenna (19), the misalignment angle indicating a derivation from orthogonal positioning of the transmitter antenna (18) and the receiver antenna (19) in relation to each other; wherein the receiver antenna (19) is further configured to receive a further signal resulting from the operation of the transmitter antenna (18) at at least one of the plurality of frequencies and wherein the processor is further configured to correct said further signal using the estimated misalignment angle; and

   wherein the processor is further configured to use the corrected signal to estimate the parameter of interest of the earth formation.

6. The apparatus of claim 5, wherein the processor is configured to estimate the misalignment angle by further representing the signal at each of the plurality of frequencies by a Taylor series expansion.

7.  The apparatus of claim 5 or 6, wherein said further signal is an in-phase signal.

8.  The apparatus of any of claims 5-7, wherein the parameter of interest is at least one of (i) a horizontal conductivity; (ii) a vertical conductivity; (iii) a horizontal resistivity; (iv) a vertical resistivity; (v) a relative dip angle; (vi) a strike angle; (vii) a sand fraction; (viii) a shale fraction; and (ix) a water saturation.

9.  The apparatus of any of claims 5 to 8, wherein the logging tool is part of a downhole assembly, the apparatus further comprising a conveyance device selected from (i) a wireline (11), and (ii) a drilling tubular.

10. A computer readable medium to be used with an apparatus for evaluating an earth formation, the apparatus comprising:

    a logging tool (9) configured to be conveyed in a borehole in the formation;
    a transmitter antenna (18) on the logging tool (9) configured to be operated at a plurality of frequencies, the transmitter antenna (18) having a first axial direction; and
    a receiver antenna (19) having a second axial direction different from the first axial direction wherein the transmitter antenna (18) and the receiver antenna (19) are substantially orthogonal to each other, wherein the receiver antenna (19) is configured to receive a quadrature signal resulting from the operation of the transmitter antenna (18) at each of the plurality of frequencies, the medium comprising instructions which when executed on a processor enable the processor to:

        perform multi-frequency focusing of the quadrature signals received at each of the plurality of frequencies to obtain a direct field between the transmitter antenna (18) and the receiver antenna (19); and
        estimate from the direct field a misalignment angle between the transmitter antenna (18) and the receiver antenna (19), the misalignment angle indicating a derivation from orthogonal positioning of the transmitter antenna (18) and the receiver antenna (19) in relation to each other; and

    wherein the receiver antenna (19) is further configured to receive a further signal resulting from the operation of the transmitter antenna (18) at at least one of the plurality of frequencies and wherein the medium further comprises instructions which when executed enable the processor to correct said further signal using the estimated misalignment angle, and to use the corrected signal to estimate the parameter of interest of the earth formation.

**Patentansprüche**

1.  Verfahren zum Schätzen eines interessierenden Parameters einer Erdformation, wobei das Verfahren Folgendes umfasst:

    Fördern eines Messwerkzeugs (9) in ein Bohrloch in der Erdformation;
    Anregen einer Senderantenne (18) auf dem Messwerkzeug (9) bei einer Vielzahl von Frequenzen, wobei die Senderantenne (18) eine erste axiale Richtung aufweist;
    Empfangen eines Quadratursignals, das auf die Anregung reagiert, bei jeder der Vielzahl von Frequenzen mit einer Empfängerantenne (19), die eine zweite axiale Richtung aufweist, die sich von der ersten axialen Richtung unterscheidet, wobei die erste axiale Richtung und die zweite axiale Richtung im Wesentlichen orthogonal zueinander sind;
    Durchführen einer Mehrfrequenzfokussierung der Quadratursignale, die bei jeder der Vielzahl von Frequenzen empfangen werden, um ein Direktfeld zwischen der Senderantenne (18) und der Empfängerantenne (19) zu erhalten;
    Schätzen eines Fehlausrichtungswinkels zwischen der Senderantenne (18) und der Empfängerantenne (19) aus dem Direktfeld, wobei der Fehlausrichtungswinkel eine Abweichung von der orthogonalen Positionierung der Senderantenne (18) und der Empfängerantenne (19) in Bezug aufeinander anzeigt;
    Empfangen eines weiteren Signals mit der Empfängerantenne (19) bei mindestens einer der Vielzahl von Frequenzen;
    Korrigieren des weiteren Signals unter Verwendung des geschätzten Fehlausrichtungswinkels; und
    Verwenden des korrigierten Signals, um den interessierenden Parameter der Erdformation zu schätzen.

2.  Verfahren nach Anspruch 1, wobei das Schätzen des Fehlausrichtungswinkels ferner das Darstellen des Signals bei jeder der Vielzahl von Frequenzen durch eine Taylor-Reihenexpansion umfasst.

3.  Verfahren nach Anspruch 1 oder 2, wobei das weitere Signal ein phasengleiches Signal umfasst.

4.  Verfahren nach einem der vorstehenden Ansprüche, wobei der interessierende Parameter mindestens einer der Folgenden ist: (i) eine horizontale Leitfähigkeit; (ii) eine vertikale Leitfähigkeit; (iii) ein horizontaler Widerstand; (iv) ein vertikaler Widerstand; (v) ein relativer Neigungswinkel; (vi) ein Anschlagwinkel; (vii) eine Sandfraktion; (viii) eine Schieferfraktion; und (ix) eine Wassersättigung.

5.  Vorrichtung zum Schätzen eines interessierenden Parameters einer Erdformation, wobei die Vorrichtung Folgendes umfasst:

    ein Messwerkzeug (9), das zum Fördern in einem Bohrloch in der Formation konfiguriert ist;
    eine Senderantenne (18) auf dem Messwerkzeug (9), die zum Betreiben bei einer Vielzahl von Frequenzen konfiguriert ist, wobei die Senderantenne (18) eine erste axiale Richtung aufweist;
    eine Empfängerantenne (19) mit einer zweiten axialen Richtung, die sich von der ersten axialen Richtung unterscheidet, wobei die Senderantenne (18) und die Empfängerantenne (19) im Wesentlichen orthogonal zueinander sind, wobei die Empfängerantenne (19) zum Empfangen eines Quadratursignals konfiguriert ist, das aus dem Betrieb der Senderantenne (18) bei jeder der Vielzahl von Frequenzen hervorgeht; und
    einen Prozessor, der konfiguriert ist zum:

    Durchführen einer Mehrfrequenzfokussierung der Quadratursignale, die bei jeder der Vielzahl von Frequenzen empfangen werden, um ein Direktfeld zwischen der Senderantenne (18) und der Empfängerantenne (19) zu erhalten; und
    Schätzen eines Fehlausrichtungswinkels zwischen der Senderantenne (18) und der Empfängerantenne (19) aus dem Direktfeld, wobei der Fehlausrichtungswinkel eine Ableitung von der orthogonalen Positionierung der Senderantenne (18)

    der Empfängerantenne (19) in Bezug aufeinander anzeigt; wobei die Empfängerantenne (19) ferner zum Empfangen eines weiteren Signals konfiguriert ist, das aus dem Betrieb der Senderantenne (18) bei mindestens einer der Vielzahl von Frequenzen hervorgeht, und wobei der Prozessor ferner zum Korrigieren des weiteren Signals unter Verwendung des geschätzten Fehlausrichtungswinkels konfiguriert ist; und
    wobei der Prozessor ferner dazu konfiguriert ist, das korrigierte Signal zu verwenden, um den interessierenden Parameter der Erdformation zu schätzen.

6.  Vorrichtung nach Anspruch 5, wobei der Prozessor zum Schätzen des Fehlausrichtungswinkels konfiguriert ist, durch weiteres Darstellen des Signals bei jeder der Vielzahl von Frequenzen durch eine Taylor-Reihenexpansion.

7.  Verfahren nach Anspruch 5 oder 6, wobei das weitere Signal ein phasengleiches Signal ist.

8.  Vorrichtung nach einem der Ansprüche 5-7, wobei der interessierende Parameter mindestens einer von (i) einer horizontalen Leitfähigkeit ist; (ii) eine vertikale Leitfähigkeit; (iii) ein horizontaler Widerstand; (iv) ein vertikaler Widerstand; (v) ein relativer Neigungswinkel; (vi) ein Anschlagwinkel; (vii) eine Sandfraktion; (viii) eine Schieferfraktion; und (ix) eine Wassersättigung.

9.  Vorrichtung nach einem der Ansprüche 5 bis 8, wobei das Messwerkzeug Teil einer Bohrlochanordnung ist, wobei die Vorrichtung ferner eine Fördervorrichtung umfasst, die ausgewählt ist aus (i) einer Drahtleitung (11) und (ii) einem Bohrrohr.

10. Computerlesbares Medium, das mit einer Vorrichtung zum Auswerten einer Erdformation zu verwenden ist, wobei die Vorrichtung Folgendes umfasst:

    ein Messwerkzeug (9), das zum Fördern in einem Bohrloch in der Formation konfiguriert ist;
    eine Senderantenne (18) auf dem Messwerkzeug (9), die zum Betreiben bei einer Vielzahl von Frequenzen konfiguriert ist, wobei die Senderantenne (18) eine erste axiale Richtung aufweist; und
    eine Empfängerantenne (19), die eine zweite axiale Richtung aufweist, die sich von der ersten axialen Richtung unterscheidet, wobei die Senderantenne (18) und die Empfängerantenne (19) im Wesentlichen orthogonal zueinander sind, wobei die Empfängerantenne (19) zum Empfangen eines Quadratursignals konfiguriert ist, das aus dem Betrieb der Senderantenne (18) bei jeder der Vielzahl von Frequenzen hervorgeht, wobei das Medium Anweisungen umfasst, die beim Ausführen auf einem Prozessor den Prozessor veranlassen zum:

Durchführen einer Mehrfrequenzfokussierung der Quadratursignale, die bei jeder der Vielzahl von Frequenzen empfangen werden, um ein Direktfeld zwischen der Senderantenne (18) und der Empfängerantenne (19) zu erhalten; und

Schätzen eines Fehlausrichtungswinkels zwischen der Senderantenne (18) und der Empfängerantenne (19) aus dem Direktfeld, wobei der Fehlausrichtungswinkel eine Ableitung von der orthogonalen Positionierung der Senderantenne (18) und der Empfängerantenne (19) in Bezug aufeinander anzeigt; und

wobei die Empfängerantenne (19) ferner zum Empfangen eines weiteren Signals konfiguriert ist, das aus dem Betrieb der Senderantenne (18) bei mindestens einer der Vielzahl von Frequenzen hervorgeht, und wobei das Medium ferner Anweisungen umfasst, die den Prozessor beim Ausführen veranlassen, das weitere Signal unter Verwendung des geschätzten Fehlausrichtungswinkels zu korrigieren und das korrigierte Signal zum Schätzen des interessierenden Parameters der Erdformation zu verwenden.

## Revendications

1. Procédé d'estimation d'un paramètre d'intérêt d'une formation terrestre, le procédé comprenant :

le transport d'un outil de diagraphie (9) dans un trou de forage dans la formation terrestre ;
l'excitation d'une antenne émettrice (18) sur l'outil de diagraphie (9) à une pluralité de fréquences, l'antenne émettrice (18) ayant une première direction axiale ;
la réception, à chacune de la pluralité de fréquences, d'un signal en quadrature réagissant à l'excitation avec une antenne réceptrice (19) ayant une deuxième direction axiale différente de la première direction axiale, la première direction axiale et la deuxième direction axiale étant sensiblement orthogonales l'une par rapport à l'autre ;
la réalisation d'une focalisation multifréquence des signaux en quadrature reçus à chacune de la pluralité de fréquences pour obtenir un champ direct entre l'antenne émettrice (18) et l'antenne réceptrice (19) ;
l'estimation à partir du champ direct d'un angle de désalignement entre l'antenne émettrice (18) et l'antenne réceptrice (19), l'angle de désalignement indiquant un écart de positionnement orthogonal de l'antenne émettrice (18) et de l'antenne réceptrice (19) l'une par rapport à l'autre ;
la réception d'un autre signal avec l'antenne réceptrice (19) à au moins l'une de la pluralité de fréquences ;
la correction dudit autre signal en utilisant l'angle de désalignement estimé ; et
l'utilisation du signal corrigé pour estimer le paramètre d'intérêt de la formation terrestre.

2. Procédé selon la revendication 1, dans lequel l'estimation de l'angle de désalignement comprend en outre la représentation du signal au niveau de chacune de la pluralité de fréquences par une expansion de la série de Taylor.

3. Procédé selon la revendication 1 ou 2, dans lequel ledit autre signal comprend un signal en phase.

4. Procédé selon l'une quelconque des revendications précédentes, dans lequel le paramètre d'intérêt est au moins l'un des éléments suivants : (i) une conductivité horizontale ; (ii) une conductivité verticale ; (iii) une résistivité horizontale ; (iv) une résistivité verticale ; (v) un angle de pente relative ; (vi) un angle d'orientation ; (vii) une fraction de sable ; (viii) une fraction de schiste ; et (ix) une saturation en eau.

5. Appareil pour estimer un paramètre d'intérêt d'une formation terrestre, l'appareil comprenant :

un outil de diagraphie (9) configuré pour être transporté dans un trou de forage de la formation ;
une antenne émettrice (18) sur l'outil de diagraphie (9) configurée pour être actionnée à une pluralité de fréquences, l'antenne émettrice (18) ayant une première direction axiale ;
une antenne réceptrice (19) ayant une deuxième direction axiale différente de la première direction axiale, l'antenne émettrice (18) et l'antenne réceptrice (19) étant sensiblement orthogonales l'une par rapport à l'autre, l'antenne réceptrice (19) étant configurée pour recevoir un signal en quadrature résultant du fonctionnement de l'antenne émettrice (18) à chacune de la pluralité de fréquences ; et
un processeur configuré pour :

réaliser une focalisation multifréquence des signaux en quadrature reçus à chacune de la pluralité de fréquences pour obtenir un champ direct entre l'antenne émettrice (18) et l'antenne réceptrice (19) ; et estimer à partir du champ direct un angle de désalignement entre l'antenne émettrice (18) et l'antenne réceptrice (19), l'angle de désalignement indiquant un écart de positionnement orthogonal de l'antenne émettrice (18) et

de l'antenne réceptrice (19) l'une par rapport à l'autre ; dans lequel l'antenne réceptrice (19) est en outre configurée pour recevoir un autre signal résultant du fonctionnement de l'antenne émettrice (18) à au moins l'une de la pluralité de fréquences et dans lequel le processeur est en outre configuré pour corriger ledit autre signal en utilisant l'angle de désalignement estimé ; et
dans lequel le processeur est en outre configuré afin d'utiliser le signal corrigé pour estimer le paramètre d'intérêt de la formation terrestre.

6. Appareil selon la revendication 5, dans lequel le processeur est configuré pour estimer l'angle de désalignement en représentant en outre le signal au niveau de chacune de la pluralité de fréquences par une expansion de la série de Taylor.

7. Appareil selon la revendication 5 ou 6, dans lequel ledit autre signal est un signal en phase.

8. Appareil selon l'une quelconque des revendications 5 à 7, dans lequel le paramètre d'intérêt est au moins l'un des éléments suivants : (i) une conductivité horizontale ; (ii) une conductivité verticale ; (iii) une résistivité horizontale ; (iv) une résistivité verticale ; (v) un angle de pente relative ; (vi) un angle d'orientation ; (vii) une fraction de sable ; (viii) une fraction de schiste ; et (ix) une saturation en eau.

9. Appareil selon l'une quelconque des revendications 5 à 8, dans lequel l'outil de diagraphie fait partie d'un ensemble de fond de trou, l'appareil comprenant en outre un dispositif de transport choisi parmi (i) un câble métallique (11) et (ii) un élément tubulaire de forage.

10. Support lisible par un ordinateur destiné à être utilisé avec un appareil pour évaluer une formation terrestre, l'appareil comprenant :

un outil de diagraphie (9) configuré pour être transporté dans un trou de forage de la formation ;
une antenne émettrice (18) sur l'outil de diagraphie (9) configurée pour être actionnée à une pluralité de fréquences, l'antenne émettrice (18) ayant une première direction axiale ; et
une antenne réceptrice (19) ayant une deuxième direction axiale différente de la première direction axiale, l'antenne émettrice (18) et l'antenne réceptrice (19) étant sensiblement orthogonales l'une par rapport à l'autre, l'antenne réceptrice (19) étant configurée pour recevoir un signal en quadrature résultant du fonctionnement de l'antenne émettrice (18) à chacune de la pluralité de fréquences, le support comprenant des instructions qui, lorsqu'elles sont exécutées sur un processeur, permettent au processeur de :

réaliser une focalisation multifréquence des signaux en quadrature reçus à chacune de la pluralité de fréquences pour obtenir un champ direct entre l'antenne émettrice (18) et l'antenne réceptrice (19) ; et estimer à partir du champ direct d'un angle de désalignement entre l'antenne émettrice (18) et l'antenne réceptrice (19), l'angle de désalignement indiquant un écart de positionnement orthogonal de l'antenne émettrice (18) et de l'antenne réceptrice (19) l'une par rapport à l'autre ; et

dans lequel l'antenne réceptrice (19) est en outre configurée pour recevoir un autre signal résultant du fonctionnement de l'antenne émettrice (18) à au moins l'une de la pluralité de fréquences et dans lequel le support comprend en outre des instructions qui, lorsqu'elles sont exécutées, permettent au processeur de corriger ledit autre signal en utilisant l'angle de désalignement estimé et d'utiliser le signal corrigé pour estimer le paramètre d'intérêt de la formation terrestre.

**FIG. 1**

TILT PRINCIPLE OF OPERATION

CONVENTIONAL MODE (EXISTING TOOL)

ADDITIONAL MODE (NEW TOOL)

SHALE: LOW $R_t$

SAND: HIGH $R_t$

FIG. 2A (Prior Art)

FIG. 2B (Prior Art)

Anisotropy
Axis

$\theta$

$R_v$

$R_h$

$Z$

**FIG. 3**

**FIG. 4**

ACQUIRE DATA AT A
PLURALITY OF FREQUENCIES — 101

PERFORM MULTI-FREQUENCY FOCUSING
AND ESTIMATE DIRECT FIELD FROM
QUADRATURE MEASUREMENTS — 103

ESTIMATE MISALIGNMENT
ANGLE — 105

CORRECT MEASUREMENTS
USING DETERMINED ANGLE — 107

201

LOWER TOOL TO
HOMOGENOUS INTERVAL

203

MEASURE $H_{xx}$ AND $H_{xy}$
AS TOOL ROTATES

*FIG. 5*

205

AVERAGE $H_{xx}$ AND $H_{xy}$ AND
DETERMINE MISALIGNMENT ANGLE

207

CORRECT MEASUREMENTS
USING DETERMINED ANGLE

301

INVERT MULTICOMPONENT DATA
WITHOUT USING XY COMPONENT

303

GENERATE SYNTHETIC XY
RESPONSE

*FIG. 6*

305

DETERMINE AVERAGE XX AND XY
RESPONSE OVER INTERVAL

307

DETERMINE MISALIGNMENT
ANGLE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4837517 A
- US 5157605 A, Chandler
- US 5600246 A, Fanini
- US 4302722 A, Gianzero
- WO 9800733 A, Beard
- US 5452761 A, Beard
- US 5999883 A, Gupta
- US 5781436 A, Forgang

- US 5884227 A, Rabinovich
- US 6470274 B, Mollison
- US 6643589 B, Zhang
- US 6636045 B, Tabarovsky
- US 299053, Chemali
- US 6885947 B, Xiao
- US 867619, Tabarovsky

**Non-patent literature cited in the description**

- **J. H. MORAN ; K. S. KUNZ.** Basic Theory of Induction Logging and Application to Study of Two-Coil Sondes, Geophysics. *Society of Exploration Geophysicists,* December 1962, vol. 27 (6), 829-858

- **ALUMBAUGH.** A Numerical Feasability Study of Three Component Induction Logging for Three Dimensional Imaging About a Single Borehole. *Sandia Report SAND99-2168,* 1999
- **TABAROVSKY.** Measuring Formation Anisotropy Using Multifrequency Processing of Transverse Induction Measurements. *SPE 71706, SPE International,* 2001